# EUROPÄISCHE PATENTANMELDUNG

(11) **EP 2 175 333 A1**
(43) Veröffentlichungstag der Anmeldung: **14.04.2010**
(21) Anmeldenummer: 08017840.3
(22) Anmeldetag: 10.10.2008
(51) Int. Cl.: G05B 19/4063, G05B 9/03

(54) **Steuerungssystem zur Steuerung einer Werkzeugmaschine von der Werkzeuge antreibbar sind**

(71) Anmelder: Siemens Aktiengesellschaft, 80333 München (DE)
(72) Erfinder: Tolkmitt, Tom, 90768 Fürth (DE)

(57) **Zusammenfassung**

Die Erfindung betrifft ein Steuerungssystem zur Steuerung einer Werkzeugmaschine von der Werkzeuge (12a,12b,12c) antreibbar sind, wobei das Steuerungssystem (31) eine Steuereinrichtung (23) und eine Antriebseinrichtung (9) aufweist, wobei die Steuereinrichtung (23) ausgebildet ist eine erste Bewegungsistgröße (vᵢₛₜ₁) eines angetriebenen Werkzeugs (12a) einzulesen und falls die erste Bewegungsistgröße (vᵢₛₜ₁) und/oder eine von der ersten Bewegungsistgröße (vᵢₛₜ₁) abgeleitete Größe den ihr jeweilig zugehörigen spezifischen Bewegungsgrenzwert (vₐₘₐₓ,aₐₘₐₓ) des angetriebenen Werkzeugs (12a) überschreitet eine Fehlerreaktion des Steuerungssystems (31) zu bewirken, wobei die Antriebseinrichtung (9) ausgebildet ist eine zweite Bewegungsistgröße (vᵢₛₜ₁) des angetriebenen Werkzeugs (12a) einzulesen und falls die zweite Bewegungsistgröße (vᵢₛₜ₁) und/oder eine von der zweiten Bewegungsistgröße (vᵢₛₜ₁) abgeleitete Größe den ihr jeweilig zugehörigen spezifischen Bewegungsgrenzwert (vₐₘₐₓ,aₐₘₐₓ) des angetriebenen Werkzeugs (12a) überschreitet eine Fehlerreaktion des Steuerungssystems (31) zu bewirken. Weiterhin betrifft die Erfindung ein Verfahren zum sicheren Betrieb einer Werkzeugmaschine von der Werkzeuge (12a,12b,12c) antreibbar sind. Die Erfindung ermöglicht einen sicheren Betrieb einer Werkzeugmaschine.

## Beschreibung

Die Erfindung betrifft ein Steuerungssystem zur Steuerung einer Werkzeugmaschine von der Werkzeuge antreibbar sind.

Weiterhin betrifft die Erfindung ein Verfahren zum sicheren Betrieb einer Werkzeugmaschine von der Werkzeuge antreibbar sind.

Handelsübliche Werkzeugmaschinen weisen im Allgemeinen einen mit mehreren Werkzeugen bestückten Werkzeugwechsler auf, mit Hilfe dessen das für den jeweiligen notwendigen Bearbeitungsvorgang zur Bearbeitung eines Werkstücks notwendige Werkzeug automatisiert gewechselt wird. Dabei wird das gerade für den Bearbeitungsvorgang benötigte Werkzeug, wie z.B. ein bestimmter Fräser, mittels des Werkzeugwechslers in die Werkzeugaufnahmevorrichtung einer drehbar angeordneten Spindel eingeführt. Der Werkzeugwechselvorgang, sowie der anschließende Bearbeitungsvorgang werden von einer Steuereinrichtung der Werkzeugmaschine gesteuert. Die Steuereinrichtung steuert dabei den Bearbeitungsvorgang und welches Werkzeug für den betreffenden Bearbeitungsvorgang verwendet wird anhand eines Teileprogramms. In dem Teileprogramm wird z.B. festgelegt, mit welcher Geschwindigkeit, insbesondere Drehgeschwindigkeit das Werkzeug, wie z.B. ein Fräser, rotieren soll.

Die einzelnen Werkzeuge weisen jedoch oftmals große Massenunterschiede und große Unterschiede im geometrischen Aufbau auf. So darf ein entsprechend großes Werkzeug, wie z.B. ein großer Fräser, in der Regel gegenüber einem kleinen Werkzeug, wie z.B. einem kleinen Fräser oder kleinem Bohrer, nur mit einer wesentlich geringen Drehgeschwindigkeit rotieren. Wenn nun, z.B. im Teileprogramm, infolge z.B. einer Unachtsamkeit, eine für das Werkzeug zu hohe Drehgeschwindigkeit (die Drehgeschwindigkeit kann dabei z.B. in Form einer Drehzahl vorliegen) festgelegt wurde, kann dies zu schweren Schäden am Werkzeug, an der Maschine oder sogar im Extremfall zu Personenschäden führen, weil z.B. zerstörte Teile des Werkzeugs mit hoher Geschwindigkeit durch den Raum fliegen können und Personen treffen können.

Aber selbst wenn im Teileprogramm die Drehgeschwindigkeit für das jeweilige Werkzeug korrekt ist, kann es trotzdem zu schweren Schäden am Werkzeug, an der Werkzeugmaschine und von die Werkzeugmaschine umgebenden Personen kommen. Neben den oben beschriebenen Geschwindigkeitsbewegungsgrenzen darf oftmals das Werkzeug auch nur mit einer bestimmten maximalen Beschleunigung und einen maximalen Ruck beschleunigt werden. Wird z.B. ein Werkzeug zu schnell auf die entsprechend vorgegebene Drehgeschwindigkeit beschleunigt, so kann es sich z.B. aus der Werkzeugaufnahmevorrichtung lösen, was zu den oben genannten schweren Schäden führen kann. Dies tritt in der Praxis immer wieder auf, da von der Steuereinrichtung die entsprechenden Sollwerte zur Ansteuerung des den Werkzeug antreibenden Motors, im Allgemeinen von der Steuereinrichtung derart erzeugt werden, dass möglichst schnell die gewünschte Solldrehgeschwindigkeit erreicht wird, d.h. es wird in Abhängigkeit von dem maximalen Beschleunigungsvermögen des Motors das Werkzeug möglichst schnell beschleunigt. Bei kleinen massearmen Werkzeugen ist diese Vorgehensweise im Allgemeinen optimal, sie kann jedoch bei größeren, massenreichen oder komplexer aufgebauten Werkzeugen zu den oben aufgeführten Schäden führen.

Bei handelsüblichen Werkzeugmaschinen ist es bekannt, die Drehzahl des Werkzeugs durch zusätzliche steuerungsexterne Hardware mit einem zusätzlichen Messsystem zu überwachen.

Nachteilig hierbei ist zum Einen, dass zusätzliche externe Hardware benötigt wird und weiterhin nur eine einkanalige Überwachung stattfindet, d.h. wenn die zusätzliche externe Hardware einen Fehler aufweist, kann der unbeschriebene Fehler nicht mehr erkannt werden.

Es ist Aufgabe der Erfindung eine Steuerungssystem und ein Verfahren zu schaffen, die einen sicheren Betrieb einer Werkzeugmaschine ermöglichen.

Diese Aufgabe wird gelöst durch ein Steuerungssystem zur Steuerung einer Werkzeugmaschine von der Werkzeuge antreibbar sind, wobei das Steuerungssystem eine Steuereinrichtung und eine Antriebseinrichtung aufweist, wobei die Steuereinrichtung und die Antriebseinrichtung einen Speicher zur Speicherung eines den Werkzeugen jeweilig zugeordneten für das jeweilige Werkzeug spezifischen Bewegungsgrenzwerts oder zur Speicherung von mehreren den Werkzeugen jeweilig zugeordneten für das jeweilige Werkzeug spezifischen Bewegungsgrenzwerten aufweisen, wobei die Steuereinrichtung ausgebildet ist eine erste Bewegungsistgröße eines angetriebenen Werkzeugs einzulesen und falls die erste Bewegungsistgröße und/oder eine von der ersten Bewegungsistgröße abgeleitete Größe den ihr jeweilig zugehörigen spezifischen Bewegungsgrenzwert des angetriebenen Werkzeugs überschreitet eine Fehlerreaktion des Steuerungssystems zu bewirken, wobei die Antriebseinrichtung ausgebildet ist eine zweite Bewegungsistgröße des angetriebenen Werkzeugs einzulesen und falls die zweite Bewegungsistgröße und/oder eine von der zweiten Bewegungsistgröße abgeleitete Größe den ihr jeweilig zugehörigen spezifischen Bewegungsgrenzwert des angetriebenen Werkzeugs überschreitet eine Fehlerreaktion des Steuerungssystems zu bewirken.

Weiterhin wird diese Aufgabe gelöst durch Verfahren zum sicheren Betrieb einer Werkzeugmaschine von der Werkzeuge antreibbar sind, wobei in einer Steuereinrichtung und in einer Antriebseinrichtung ein zu den Werkzeugen jeweilig zugeordneter für das jeweilige Werkzeug spezifischer Bewegungsgrenzwert gespeichert ist oder mehrere den Werkzeugen jeweilig zugeordnete und für das jeweilige Werkzeug spezifische Bewegungsgrenzwerte gespeichert sind, wobei von der Steuereinrichtung eine erste Bewegungsistgröße eines angetriebenen Werkzeugs eingelesen wird und falls von der ersten Bewegungsistgröße und/oder von einer von der ersten Bewegungsistgröße abgeleiteten Größe der ihr jeweilig zugehörige spezifische Bewegungsgrenzwert des angetriebenen Werkzeugs überschritten wird eine Fehlerreaktion des Steuerungssystems von der Steuereinrichtung bewirkt wird, wobei von der Antriebseinrichtung eine zweite Bewegungsistgröße des angetriebenen Werkzeugs eingelesen wird und falls von der zweiten Bewegungsistgröße und/oder von einer von der zweiten Bewegungsistgröße abgeleiteten Größe der ihr jeweilig zugehörige spezifische Bewegungsgrenzwert des angetriebenen Werkzeugs überschritten wird eine Fehlerreaktion des Steuerungssystems von der Antriebseinrichtung bewirkt wird.

Vorteilhafte Ausbildungen der Erfindung ergeben sich aus den abhängigen Ansprüchen.

Vorteilhafte Ausbildungen des Steuerungssystems ergeben sich analog zur vorteilhaften Ausbildung des Verfahrens und umgekehrt.

Es erweist sich als vorteilhaft, wenn die Steuereinrichtung ausgebildet ist falls die erste Bewegungsistgröße und/oder eine von der ersten Bewegungsistgröße abgeleitete Größe den ihr jeweilig zugehörigen spezifischen Bewegungsgrenzwert des angetriebenen Werkzeugs überschreitet ein erstes Alarmsignal zu erzeugen, wobei die Antriebseinrichtung ausgebildet ist falls die zweite Bewegungsistgröße und/oder eine von der zweiten Bewegungsistgröße abgeleitete Größe den ihr jeweilig zugehörigen spezifischen Bewegungsgrenzwert des angetriebenen Werkzeugs überschreitet ein zweites Alarmsignal zu erzeugen, wobei das erste Alarmsignal von der Steuereinrichtung an die Antriebseinrichtung übermittelbar ist und das zweite Alarmsignal von der Antriebsseinrichtung an die Steuereinrichtung übermittelbar ist, wobei die Steuereinrichtung ausgebildet ist bei Empfang des ersten Alarmsignals die Fehlerreaktion des Steuerungssystems zu bewirken, wobei die Antriebseinrichtung ausgebildet ist bei Empfang des zweiten Alarmsignals die Fehlerreaktion des Steuerungssystems zu bewirken. Durch den kreuzweisen Austausch des ersten und zweiten Alarmsignals in Verbindung mit der Fehlerreaktion wird eine besonders hohe Sicherheit gewährleistet.

Ferner erweist es sich als vorteilhaft, wenn die erste Bewegungsistgröße von der Steuereinrichtung an die Antriebseinrichtung übermittelbar ist und die zweite Bewegungsistgröße von der Antriebsseinrichtung an die Steuereinrichtung übermittelbar ist, wobei die Steuereinrichtung ausgebildet ist falls die zweite Bewegungsistgröße und/oder eine von der zweiten Bewegungsistgröße abgeleitete Größe den ihr jeweilig zugehörigen spezifischen Bewegungsgrenzwert des angetriebenen Werkzeugs überschreitet die Fehlerreaktion des Steuerungssystems zu bewirken, wobei die Antreibseinrichtung ausgebildet ist falls die erste Bewegungsistgröße und/oder eine von der ersten Bewegungsistgröße abgeleitete Größe den ihr jeweilig zugehörigen spezifischen Bewegungsgrenzwert des angetriebenen Werkzeugs überschreitet die Fehlerreaktion des Steuerungssystems zu bewirken. Durch den kreuzweisen Austausch der ersten und zweiten Bewegungsistgröße in Verbindung mit der Fehlerreaktion wird eine besonders hohe Sicherheit gewährleistet.

Weiterhin erweist es sich als vorteilhaft, wenn die Fehlerreaktion in Form eines Anhaltens der Bewegung des angetriebenen Werkzeugs vorliegt. Hierdurch wird die Werkzeugmaschine in einen sicheren Zustand versetzt.

Ferner erweist es sich als vorteilhaft, wenn das Steuerungssystem einen ersten Geber zur Ermittelung der ersten Bewegungsistgröße des angetriebenen Werkzeugs und einen zweiten Geber zur Ermittelung der zweiten Bewegungsistgröße des angetriebenen Werkzeugs aufweist. Wenn die erste Bewegungsistgröße und die zweite Bewegungsistgröße unabhängig voneinander ermittelt werden, wird ein besonders sicherer Betrieb der Werkzeugmaschine ermöglicht.

Ferner erweist es sich als vorteilhaft, wenn das Steuerungssystem einen Geber zur Ermittelung einer Bewegungsistgröße des angetriebenen Werkzeugs aufweist, wobei die Bewegungsistgröße als erste Bewegungsistgröße von der Steuereinrichtung einlesbar ist und die Bewegungsistgröße als zweite Bewegungsistgröße von der Antriebseinrichtung einlesbar ist. Die Bewegungsistgröße ist somit als erste Bewegungsistgröße von der Steuereinrichtung einlesbar und als zweite Bewegungsistgröße von der Antriebseinrichtung einlesbar. Wenn die erste Bewegungsistgröße und die zweite Bewegungsistgröße das gleiche Signal sind kann auf die Verwendung eines zweiten Gebers verzichtet werden, was den Hardwareaufbau vereinfacht.

Ferner erweist es sich als vorteilhaft, wenn das Steuerungssystem eine Leseeinrichtung zur Ermittelung des angetriebenen Werkzeugs aufweist, wobei die Leseeinrichtung das von ihr ermittelte Werkzeug an die Antriebseinrichtung übermittelt, da mittels einer Leseeinrichtung auf besonders einfache Art und Weise das gerade angetriebene Werkzeug ermittelt werden kann.

Ferner erweist es sich als vorteilhaft, wenn die Leseeinrichtung als RFID-Leseeinrichtung ausgebildet ist. Mittels einer RFID-Leseeinrichtung, d.h. einer Leseeinrichtung, die mittels der RFID-Technologie das gerade angetriebene Werkzeug ermittelt, kann auf einfache Art und Weise das gerade angetriebene Werkzeug ermittelt werden.

Ferner erweist es sich als vorteilhaft, eine Werkzeugmaschine mit dem erfindungsgemäßen Steuerungssystem auszubilden.

Zwei Ausführungsbeispiele sind in der Zeichnung dargestellt und werden im Folgenden näher erläutert. Dabei zeigen:
- FIG 1: eine Werkzeugmaschine mit einer ersten Ausführungsform des erfindungsgemäßen Steuerungssystems und
- FIG 2: eine Werkzeugmaschine mit einer zweiten Ausführungsform des erfindungsgemäßen Steuerungssystems.

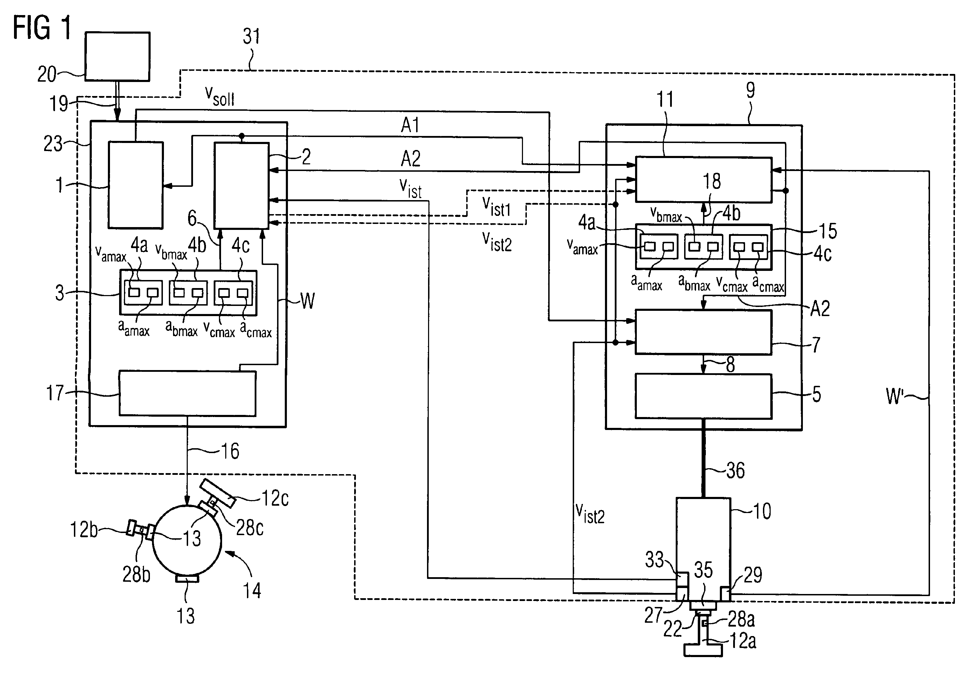

In FIG 1 ist in Form einer schematisierten Darstellung eine Werkzeugmaschine dargestellt, die ein erfindungsgemäßes Steuerungssystem 31 aufweist. Das Steuerungssystem 31 weist eine Steuereinrichtung 23 zur Steuerung der Bewegung der Werkzeugmaschine und eine Antriebseinrichtung 9 zur Ansteuerung eines Motors 10 auf. Ein Werkzeugwechsler 14 der Werkzeugmaschine ist in der momentan in der FIG 1 dargestellten Konfiguration mit den Werkzeugen 12b und 12c (z.B. mit unterschiedlichen Fräsern) bestückt. Die Werkzeuge werden mittels Haltevorrichtungen 13 im Werkzeugwechsler 14 gehalten. Die Steuereinrichtung 23 erzeugt ausgangsseitig eine Bewegungssollgröße vₛₒₗₗ in Form von in einem äquidistanten Zeittakt erzeugten Sollwerten, die im Rahmen des Ausführungsbeispiels als Geschwindigkeitssollwerte ausgebildet sind.

Die Bewegungssollgröße vₛₒₗₗ wird an die Antriebseinrichtung 9 ausgegeben und bildet die Regelsollgröße zur Regelung der Bewegung des Werkzeugs 12a. Die Antriebseinrichtung 9 weist hierzu eine Regeleinheit 7 und einen Stromrichter 5 zur Ansteuerung des Motors 10 auf. Entsprechend der vorgegebenen Bewegungssollgröße vₛₒₗₗ regelt die Antriebseinrichtung 9 die Bewegung eines Werkzeugs 12a, d.h. im Rahmen des Ausführungsbeispiels die Drehgeschwindigkeit des Werkzeugs 12a. Die Antriebseinrichtung 9 ist hierzu über eine Verbindung 36, die in Form von elektrischen Leitungen vorliegt, mit dem Motor 10 verbunden. Der Motor 10 treibt rotierend eine Spindel 35 an, die eine Werkzeugaufnahmevorrichtung 22 aufweist. In die Werkzeugaufnahmevorrichtung 22 befindet sich im Rahmen des Ausführungsbeispiels gerade das Werkzeug 12a, das z.B. in Form eines Fräsers vorliegen kann. Die Werkzeugaufnahmevorrichtung 22 dient zur Einspannung des Werkzeugs 12a.

Weiterhin wird von der Antriebseinrichtung 9 eine gemessene zweite Bewegungsistgröße vᵢₛₜ₂ eingelesen, die im Rahmen des Ausführungsbeispiels in Form einer gemessenen zweiten Drehgeschwindigkeit der rotierenden Spindel 35 und damit des Werkzeugs 12a vorliegt. Die zweite Bewegungsistgröße vᵢₛₜ₂ wird von einem zweiten Geber 27 ermittelt. Die zweite Bewegungsistgröße vᵢₛₜ₂ wird zur Regelung der Drehzahl der Spindel 35 als Regelistgröße an die Antriebseinrichtung 9 ausgegeben.

Die Steuereinrichtung 23 weist eine Steuereinheit 17 auf, die im Rahmen des Ausführungsbeispiels als eine sogenannte PLC (Programmable Logic Control) ausgebildet ist. Die Steuereinheit 17 erzeugt Steuersignale 16 zur Ansteuerung des Werkzeugwechslers 14. Mittels des Werkzeugwechslers 14 kann, entsprechend den Steuersignalen 16, das gerade in der Werkzeugaufnahmevorrichtung 22 eingespannte Werkzeug ausgewechselt werden.

Zum translatorischen Verfahren der Spindel 35 und damit des Werkzeugs 12a weist die Maschine mehrere Antriebseinrichtungen und entsprechend den Antriebseinrichtungen zugeordnete Motoren auf, die entsprechend der Antriebseinrichtung 9 von der Steuereinrichtung 18 eine jeweilig zugeordnete Bewegungssollgröße zur Steuerung der jeweiligen translatorischen Bewegung der Spindel 35 als Eingangsgröße erhalten. Der Übersichtlichkeit halber und da sie zum Verständnis der Erfindung unwesentlich sind, sind die zum translatorischen Verfahren der Spindel 35 vorhandenen Antriebseinrichtungen und Motoren in der Figur nicht dargestellt.

Die Steuereinrichtung 18 weist weiterhin eine Sollwerterzeugungseinheit 1 zur Erzeugung der Bewegungssollgröße vₛₒₗₗ zur Steuerung der Bewegung des Werkzeugs 12a anhand eines Teileprogramms 20, das von der Steuereinrichtung 23 eingelesen wird, was durch einen Pfeil 19 dargestellt ist, auf. In dem Teileprogramm 20 ist dabei jeder Bearbeitungsvorgang zur Bearbeitung eines Werkstücks in Form von einer Abfolge von Befehlen definiert. Im Allgemeinen wird dabei die Bewegungssollgröße vₛₒₗₗ so von der Sollwerterzeugungseinheit 1 erzeugt, dass der jeweilige Bearbeitungsvorgang möglichst schnell ausgeführt wird. Die Sollwerterzeugungseinheit 1 gibt die Bewegungssollgröße vₛₒₗₗ aus, die in Form einer Abfolge von seitlich äquidistanten ausgegebenen Geschwindigkeitssollwerten vorliegt. Im Rahmen des Ausführungsbeispiels liegt die Bewegungssollgröße vₛₒₗₗ somit in Form einer Geschwindigkeitssollgröße vor. Alternativ könnte sie jedoch auch in Form einer Lagesollgröße vorliegen.

Erfindungsgemäß weist die Steuereinrichtung 23 einen Speicher 3 und die Antriebseinrichtung 9 einen Speicher 15 auf, in denen jeweilig für die Werkzeuge 12a, 12b und 12c spezifische Bewegungsgrenzwerte vₐₘₐₓ, aₐₘₐₓ, v_{bmax}, a_{bmax}, V_{cmax} und a_{cmax} gespeichert sind. Die Bewegungsgrenzwerte liegen dabei im Rahmen des Ausführungsbeispiels als Geschwindigkeitsbewegungsgrenzwerte und Beschleunigungsbewegungsgrenzwerte vor. So darf das Werkzeug 12a maximal mit dem Geschwindigkeitsbewegungsgrenzwert vₐₘₐₓ gedreht und maximal mit dem Beschleunigungsbewegungsgrenzwert aₐₘₐₓ beschleunigt werden. Entsprechend darf das Werkzeug 12b maximal mit dem Geschwindigkeitsbewegungsgrenzwert v_{bmax} gedreht werden und maximal mit dem Beschleunigungsbewegungsgrenzwert a_{bmax} beschleunigt werden. Das Werkzeug 12c darf maximal mit dem Geschwindigkeitsbewegungsgrenzwert v_{cmax} bewegt und mit dem Beschleunigungsbewegungsgrenzwert aₐₘₐₓ beschleunigt werden. Im Rahmen des Ausführungsbeispiels sind somit zu jedem Werkzeug zwei Bewegungsgrenzwerte definiert. Es kann dabei im Allgemeinen aber auch nur ein einzelner Bewegungsgrenzwert pro Werkzeug definiert werden oder aber noch weitere Grenzwerte wie z.B. ein maximaler Ruckbewegungsgrenzwert. Dies ist vom Anwendungsfall und den eingesetzten Werkzeugen abhängig. Solchermaßen sind in dem Speicher 3 und dem Speicher 15 zu jedem Werkzeug für das jeweilige Werkzeug spezifische Bewegungsgrenzwerte gespeichert. Die einzelnen Bewegungsgrenzwerte sind dabei Bestandteil eines zu jedem Werkzeug zugeordneten Datensatzes 4a, 4b und 4c.

Erfindungsgemäß weist die Steuereinrichtung 23 eine erste Überwachungseinheit 2 auf. Die Steuereinheit 17 teilt der ersten Überwachungseinheit 2 das gerade in der Werkzeugaufrichtung 22 eingespannte Werkzeug mittels eines Signals W mit. Entsprechend dem gerade eingespannten Werkzeug, d.h. im Ausführungsbeispiel ist dies das Werkzeug 12a, liest die erste Überwachungseinheit 2, die zum Werkzeug 12a zugehörigen Bewegungsgrenzwerte vₐₘₐₓ und aₐₘₐₓ aus dem Speicher 3 aus, was durch einen Pfeil 6 in FIG 1 dargestellt ist.

Weiterhin wird von der Steuereinrichtung 23 und insbesondere von der ersten Überwachungseinheit 2 eine gemessene erste Bewegungsistgröße vᵢₛₜ₁ eingelesen, die im Rahmen des Ausführungsbeispiels in Form einer gemessenen ersten Drehgeschwindigkeit der rotierenden Spindel 35 und damit des Werkzeugs 12a vorliegt. Die erste Bewegungsistgröße vᵢₛₜ₁ wird von einem ersten Geber 33 ermittelt.

Die erste Überwachungseinheit 2 berechnet im Folgenden aus der ersten Bewegungsistgröße vᵢₛₜ₁ im Rahmen des Ausführungsbeispiels eine abgeleitete Größe in Form einer ersten Beschleunigungsistgröße aᵢₛₜ₁ durch Ableitung der ersten Bewegungsistgröße nach der Zeit t (Berechnung des Differenzialquotienten nach der Zeit t). Falls die erste Bewegungsistgröße den ihr zugehörigen spezifischen Bewegungsgrenzwert vₐₘₐₓ überschreitet, wird eine Fehlerreaktion des Steuerungssystems von der ersten Überwachungseinheit 2 bewirkt in dem ein erstes Alarmsignal A1 von der Überwachungseinheit 2 erzeugt wird und an die Sollwerterzeugungseinheit 1 übermittelt wird. Weiterhin wird alternativ oder zusätzlich falls die von der ersten Bewegungsistgröße abgeleitete Größe, die im Rahmen des Ausführungsbeispiels in Form der ersten Beschleunigungsistgröße aᵢₛₜ₁ vorliegt, einen jeweilig zur dieser abgeleiteten Größe zugehörigen spezifischen Bewegungsgrenzwert, der im Rahmen des Ausführungsbeispiels in Form des Beschleunigungsbewegungsgrenzwerts aₐₘₐₓ vorliegt, überschreitet, die Fehlerreaktion des Steuerungssystems bewirkt, in dem ebenfalls das erste Alarmsignal A1 von der Überwachungseinheit 2 erzeugt wird und an die Sollwerterzeugungseinheit 1 übermittelt wird.

Die Fehlerreaktion des Steuerungssystems liegt dabei vorzugsweise in Form eines Anhaltens der Bewegung des gerade angetriebenen Werkzeugs, d.h. im Rahmen des Ausführungsbeispiels des Werkzeugs 12a vor. Wenn die Sollwerterzeugungseinheit 1 das erstes Alarmsignal A1 empfängt, wird von der Sollwerterzeugungseinheit 1 die Bewegungssollgröße vₛₒₗₗ, welche an die Regeleinheit 7 als Regelsollgröße übermittelt wird, derart erzeugt, dass diese rampenförmig einen Wert von 0 annimmt.

Im Rahmen des Ausführungsbeispiels umfasst die Antriebseinrichtung 9 eine zweite Überwachungseinheit 11, einen Speicher 15, eine Regeleinheit 7 und einen Stromrichter 5, der über die Verbindung 36 den Motor 10 ansteuert. Der zweite Geber 27 ermittelt, wie schon gesagt, die zweite Bewegungsistgröße vᵢₛₜ₂ des angetriebenen Werkzeugs 12a und gibt diese an die Regeleinheit 7 und an die zweite Überwachungseinheit 11 aus. Die Bewegungsistgröße vᵢₛₜ₂ bildet die Regelistgröße für die Regeleinheit 7. Die Regeleinheit 7 steuert entsprechend der Differenz von Bewegungssollgröße vₛₒₗₗ und zweiter Bewegungsistgröße vᵢₛₜ₂ den Stromrichter 5 an, was in FIG 1 durch einen Pfeil 8 dargestellt ist. Im Rahmen des Ausführungsbeispiels ist an jedem Werkzeug 12a, 12b und 12c ein jeweilig zugehöriger RFID-Chip 28a, 28b und 28c angebracht. Der RFID-Chip enthält dabei die Information um welches Werkzeug es sich handelt. Diese Information wird von einer Leseeinrichtung 29, die im Rahmen des Ausführungsbeispiels als RFID-Lesegerät ausgebildet ist und am Motor 10 angeordnet ist, in Form eines Signals W' an die zweite Überwachungseinheit 11 übermittelt.

Die zweite Überwachungseinheit 11 berechnet im Folgenden aus der zweiten Bewegungsistgröße vᵢₛₜ₂ im Rahmen des Ausführungsbeispiels eine abgeleitete Größe in Form einer zweiten Beschleunigungsistgröße aᵢₛₜ₂ durch Ableitung der zweiten Bewegungsistgröße vᵢₛₜ₂ nach der Zeit t (Berechnung des Differenzialquotienten nach der Zeit t). Falls die zweite Bewegungsistgröße vᵢₛₜ₂ den ihr zugehörigen spezifischen Bewegungsgrenzwert vₐₘₐₓ überschreitet, wird eine Fehlerreaktion des Steuerungssystems von der zweiten Überwachungseinheit 11 bewirkt indem ein zweites Alarmsignal A2 von der zweiten Überwachungseinheit 11 erzeugt wird und an die Regeleinheit 7 übermittelt wird. Weiterhin wird alternativ oder zusätzlich falls die von der zweiten Bewegungsistgröße abgeleitete Größe, die im Rahmen des Ausführungsbeispiels in Form der zweiten Beschleunigungsistgröße aᵢₛₜ₂ vorliegt, einen jeweilig zur dieser abgeleiteten Größe zugehörigen spezifischen Bewegungsgrenzwert, der im Rahmen des Ausführungsbeispiels in Form des Beschleunigungsbewegungsgrenzwerts aₐₘₐₓ vorliegt, überschreitet, die Fehlerreaktion des Steuerungssystems bewirkt, indem ebenfalls das zweite Alarmsignal A2 von der zweiten Überwachungseinheit 11 erzeugt wird und an die Regeleinheit 7 übermittelt wird.

Die Fehlerreaktion des Steuerungssystems liegt dabei vorzugsweise, wie schon gesagt, in Form eines Anhaltens der Bewegung des gerade angetriebenen Werkzeugs, d.h. im Rahmen des Ausführungsbeispiels des Werkzeugs 12a vor. Wenn die Regeleinheit 7 das zweite Alarmsignal A2 empfängt, wird von der Regeleinheit 7, der Stromrichter 5 derart angesteuert, dass dieser derart seine elektrischen Ventile ein- und ausschaltet, dass der Motor 10 anhält.

Um die Sicherheit des Betriebs der Werkzeugmaschine weiter zu erhöhen, ist es dabei vorteilhaft, dass wie im Ausführungsbeispiel, das erste Alarmsignal A1 von der ersten Überwachungseinheit 2 an die zweite Überwachungseinheit 11 übermittelt wird und das zweite Alarmsignal A2 von der zweiten Überwachungseinheit 11 an die erste Überwachungseinheit 2 übermittelt wird. Die erste Überwachungseinheit 2 erzeugt bei Empfang des zweiten Alarmsignals A2 das erste Alarmsignal A1 und bewirkt solchermaßen die Fehlerreaktion des Steuerungssystems, in dem die Sollwerterzeugungseinheit 1, wie schon vorher beschrieben, bei Empfang des ersten Alarmsignals A1 derart die Bewegungssollgröße verändert, dass die Bewegung des angetriebenen Werkzeugs 12a angehalten wird. Parallel hierzu bewirkt die Antriebseinrichtung 9 bei Empfang des ersten Alarmsignals A1 die Fehlerreaktion des Steuerungssystems indem das zweite Alarmsignal A2, wenn die zweite Überwachungseinheit 11 das erste Alarmsignals A1 empfängt, an die Regeleinheit 7 von der zweiten Überwachungseinheit 11 übermittelt wird, wobei die Regeleinheit 7 bei Empfang des zweiten Alarmsignals, wie schon vorher beschreiben, den Stromrichter 5 derart ansteuert, dass die Bewegung des Werkzeugs 12a angehalten wird.

Alternativ oder zusätzlich zum Übermitteln des ersten und zweiten Alarmsignals zwischen Steuereinrichtung 23 und Antriebseinrichtung 9 können auch die erste Bewegungsistgröße vᵢₛₜ₁ von der Steuereinrichtung 23 an Antriebsseinrichtung 9 und insbesondere an die die zweite Überwachungseinheit 11 und die zweite Bewegungsistgröße vᵢₛₜ₂ von der Antriebseinrichtung 9 an die Steuereinrichtung 23 und insbesondere an die erste Überwachungseinheit 2 übertragen werden. Die erste Überwachungseinheit 2 überwacht analog, wie schon vorher bei der ersten Bewegungsistgröße vᵢₛₜ₁ beschrieben, die zweite Bewegungsistgröße vᵢₛₜ₂ und/oder eine von der zweiten Bewegungsistgröße vᵢₛₜ₂ abgeleiteten Größe (zweite Beschleunigungsistgröße aᵢₛₜ₂) auf Überschreitung des zu der jeweiligen Bewegungsistgröße und/oder des von der zweiten Bewegungsistgröße abgeleiteten Größe (zweite Beschleunigungsistgröße aᵢₛₜ₂) zugehörigen spezifischen Bewegungsgrenzwerts (vₐₘₐₓ, aₐₘₐₓ) des angetriebenen Werkzeugs 12a und bewirkt bei Überschreitung die Fehlerreaktion des Steuerungssystems in dem das erste Alarmsignal A1 erzeugt wird. Die zweite Überwachungseinheit 11 überwacht analog, wie schon vorher bei der zweiten Bewegungsistgröße vᵢₛₜ₂ beschrieben, die erste Bewegungsistgröße vᵢₛₜ₁ und/oder eine von der ersten Bewegungsistgröße vᵢₛₜ₁ abgeleitete Größe (erste Beschleunigungsistgröße aᵢₛₜ₁) auf Überschreitung des zu der jeweiligen Bewegungsistgröße und/oder des von der ersten Bewegungsistgröße vᵢₛₜ₁ abgeleiteten Größe (erste Beschleunigungsistgröße aᵢₛₜ₁) zugehörigen spezifischen Bewegungsgrenzwerts (vₐₘₐₓ, aₐₘₐₓ) des angetriebenen Werkzeugs 12a und bewirkt bei Überschreitung die Fehlerreaktion des Steuerungssystems in dem das zweite Alarmsignal A2 erzeugt wird.

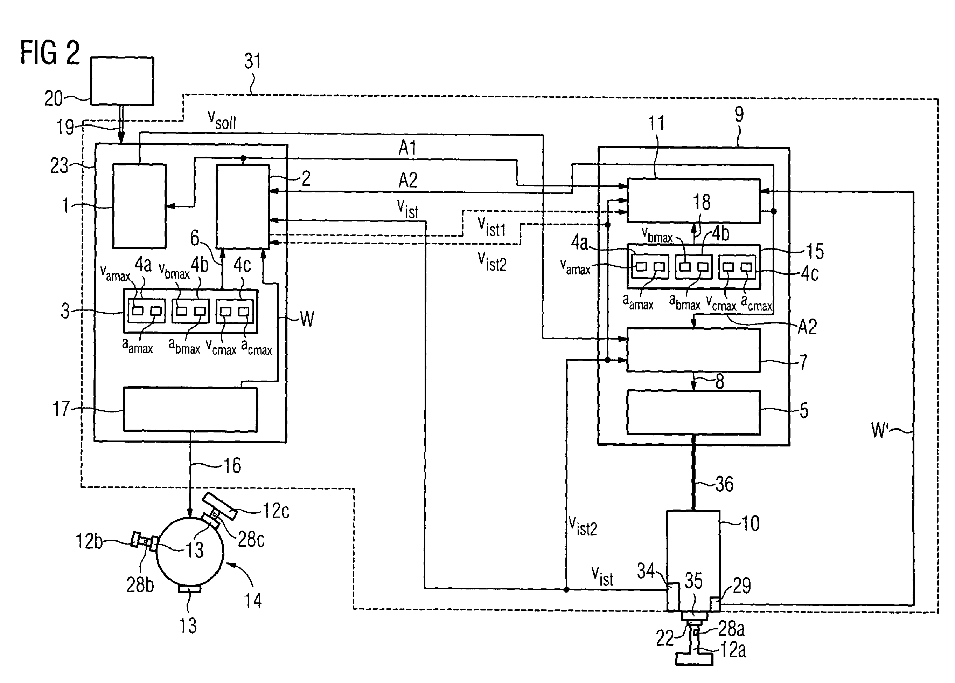

In FIG 2 ist eine weitere Ausführungsform des erfindungsgemäßen Steuerungssystems 31 dargestellt. Die in FIG 2 dargestellte Ausführungsform entspricht im Grundaufbau und in der Funktionsweise im Wesentlichen der Ausführungsform gemäß FIG 1. Gleiche Elemente sind daher in FIG 2 mit den gleichen Bezugszeichen versehen wie in FIG 1. Der einzige wesentliche Unterschied der Ausführungsform gemäß FIG 2 gegenüber der Ausführungsform gemäß FIG 1 besteht darin, dass bei der Ausführungsform gemäß FIG 2, das Steuerungssystem, nicht wie bei der Ausführungsform gemäß FIG 1, einen ersten Geber zur Ermittlung der ersten Bewegungsistgröße vᵢₛₜ₁ des angetriebenen Werkzeugs und einen zweiten Geber zur Ermittlung der zweiten Bewegungsistgröße vᵢₛₜ₂ des angetriebenen Werkzeugs 12a aufweist, sondern dass das Steuerungssystem einen Geber 34 zur Ermittlung einer Bewegungsistgröße vᵢₛₜ des angetriebenen Werkzeugs 12a aufweist, wobei die Bewegungsgröße vᵢₛₜ als erste Bewegungsgröße vᵢₛₜ₁ von der Steuereinrichtung 23 einlesen wird und die Bewegungsgröße vᵢₛₜ als zweite Bewegungsistgröße vᵢₛₜ₂ von der Antriebseinrichtung 9 eingelesen wird. Die erste Bewegungsgröße vᵢₛₜ₁ und die zweite Bewegungsistgröße vᵢₛₜ₂ sind somit das gleiche Signal. Die Ausführungsform gemäß FIG 2 hat gegenüber der Ausführungsform gemäß FIG 1 den Vorteil, dass nur ein Geber benötigt wird, und somit der Hardwareaufwand reduziert wird. Vorzugsweise sollte der Geber 34 als sogenannter "sicherer Geber" ausgebildet sein, d.h. er sollte geberinterne Sicherheitsfunktionalitäten aufweisen, die Sicher stellen, dass das die vom Geber ausgegebene Bewegungsistgröße vᵢₛₜ der tatsächlichen Bewegung, z.B. der tatsächlichen Drehgeschwindigkeit des Werkzeugs 12a, entspricht.

Es sei an dieser Stelle angemerkt, dass vorzugsweise die Steuereinrichtung 23 und die Antriebseinrichtung 9 voneinander baulich getrennt realisiert sind. So kann die Steuereinrichtung 23 z.B. auf einer ersten Prozessorbaugruppe realisiert sein, während die Antriebseinrichtung 9 auf einer zweiten Prozessorbaugruppe realisiert sein kann. Die beiden Prozessorbaugruppen können dabei z.B. in unterschiedlichen Gehäusen untergebracht sein oder z.B. in einem Rack in Form von zwei getrennten Einschubmodulen realisiert sein.

Weiterhin sei an dieser Stelle angemerkt, dass die Sollwerterzeugungseinheit 1 und die erste Überwachungseinheit 2 vorzugsweise in Form von Software, welche von einem der Steuereinrichtung 23 zugehörigen Prozessor ausgeführt wird, ausgebildet sind.

Weiterhin sei an dieser Stelle darauf hingewiesen, dass die Regeleinheit 7 und/oder der Stromrichter 5 nicht unbedingt integrale Bestandteile der Antriebseinrichtung 9 sein müssen, sondern auch baulich getrennt von der Antriebseinrichtung 9 realisiert sein können.

Weiterhin sei an dieser Stelle angemerkt, dass die zweite Überwachungseinheit 11 und die Regeleinheit 7 vorzugsweise in Form von Software, welche von einem der Antriebseinrichtung 9 zugehörigen Prozessor ausgeführt wird, realisiert sind.

Weiterhin sei an dieser Stelle angemerkt, dass im Rahmen des Ausführungsbeispiels die erste und zweite Bewegungsistgröße in Form einer Drehgeschwindigkeit ausgebildet sind. Die erste und die zweite Bewegungsistgröße können aber auch in Form einer Lage, einer Beschleunigung oder in Form eines Rucks vorliegen.

Ferner sei an dieser Stelle angemerkt, dass für die Erfindung die Werkzeugmaschine nicht unbedingt einen Werkzeugwechsler aufweisen muss, sondern der Werkzeugwechsel kann auch per Hand, z.B. durch einen Bediener der Werkzeugmaschine erfolgen. Es muss lediglich sicher gestellt sein, dass die Steuereinrichtung Kenntnis hat welches Werkzeug gerade in die Werkzeugaufnahmevorrichtung eingespannt ist und somit angetrieben wird. Dies kann z.B. durch eine entsprechende Eingabe der Information per Hand an einer der Übersichtlichkeit halber in FIG 1 und FIG 2 nicht mehr dargestellten Bedieneinrichtung der Werkzeugmaschine erfolgen.

Ferner sei an dieser Stelle angemerkt, dass für die Erfindung die Werkzeugmaschine nicht unbedingt eine Leseeinrichtung 29 aufweisen muss. Es muss lediglich sicher gestellt sein, dass die Antreibseinrichtung Kenntnis hat welches Werkzeug gerade in der Werkstückaufnahme eingespannt ist und somit angetrieben wird. Dies kann z.B. durch eine entsprechende Eingabe der Information per Hand an einer der Übersichtlichkeit halber in FIG 1 und FIG 2 nicht mehr dargestellten Bedieneinrichtung der Werkzeugmaschine erfolgen.

Oftmals wird, z.B. zur Vermessung eines Werkstückes, ein Messtaster oder eine Kamera in die Werksstückaufnahmevorrichtung eingespannt. Es sei an dieser Stelle angemerkt, dass im Rahmen Erfindung unter anderem auch ein Messtaster und eine Kamera als Werkzeuge angesehen werden.

Weiterhin sei angemerkt, dass die Bewegung des Werkstücks nicht unbedingt wie im Ausführungsbeispiel in Form einer rotierenden Bewegung vorliegen muss, sondern sie kann auch in Form einer translatorischen Bewegung oder einer Kombination von einer translatorischer Bewegung und einer rotierender Bewegung vorliegen.

Ferner sei angemerkt, das es sich bei der abgeleiteten Größe nicht unbedingt um eine nach der Zeit t abgeleite Größe handeln muss, sondern es kann sich auch um eine beliebig andere abgeleitete Größe handeln.

## Patentansprüche

1. Steuerungssystem zur Steuerung einer Werkzeugmaschine von der Werkzeuge (12a,12b,12c) antreibbar sind, wobei das Steuerungssystem (31) eine Steuereinrichtung (23) und eine Antriebseinrichtung (9) aufweist, wobei die Steuereinrichtung (23) und die Antriebseinrichtung (9) einen Speicher (3,15) zur Speicherung eines den Werkzeugen (12a,12b,12c) jeweilig zugeordneten für das jeweilige Werkzeug (12a,12b,12c) spezifischen Bewegungsgrenzwerts (vₐₘₐₓ,v_{bmax},v_{cmax}) oder zur Speicherung von mehreren den Werkzeugen (12a,12b,12c) jeweilig zugeordneten für das jeweilige Werkzeug (12a,12b,12c) spezifischen Bewegungsgrenzwerten (vₐₘₐₓ,aₐₘₐₓ,v_{bmax},a_{bmax},v_{cmax},a_{cmax}) aufweisen, wobei die Steuereinrichtung (23) ausgebildet ist eine erste Bewegungsistgröße (vᵢₛₜ₁) eines angetriebenen Werkzeugs (12a) einzulesen und falls die erste Bewegungsistgröße (vᵢₛₜ₁) und/oder eine von der ersten Bewegungsistgröße (vᵢₛₜ₁) abgeleitete Größe (aᵢₛₜ₁) den ihr jeweilig zugehörigen spezifischen Bewegungsgrenzwert (vₐₘₐₓ,aₐₘₐₓ) des angetriebenen Werkzeugs (12a) überschreitet eine Fehlerreaktion des Steuerungssystems (31) zu bewirken, wobei die Antriebseinrichtung (9) ausgebildet ist eine zweite Bewegungsistgröße (vᵢₛₜ₁) des angetriebenen Werkzeugs (12a) einzulesen und falls die zweite Bewegungsistgröße (vᵢₛₜ₂) und/oder eine von der zweiten Bewegungsistgröße (vᵢₛₜ₂) abgeleitete Größe (aᵢₛₜ₂) den ihr jeweilig zugehörigen spezifischen Bewegungsgrenzwert (vₐₘₐₓ,aₐₘₐₓ) des angetriebenen Werkzeugs (12a) überschreitet eine Fehlerreaktion des Steuerungssystems (31) zu bewirken.

2. Steuerungssystem nach Anspruch 1, **dadurch gekennzeichnet, dass** die Steuereinrichtung (23) ausgebildet ist falls die erste Bewegungsistgröße (vᵢₛₜ₁) und/oder eine von der ersten Bewegungsistgröße (vᵢₛₜ₁) abgeleitete Größe (aᵢₛₜ₁) den ihr jeweilig zugehörigen spezifischen Bewegungsgrenzwert (vₐₘₐₓ,aₐₘₐₓ) des angetriebenen Werkzeugs (12a) überschreitet ein erstes Alarmsignal (A1) zu erzeugen, wobei die Antriebseinrichtung (9) ausgebildet ist falls die zweite Bewegungsistgröße (vᵢₛₜ₂) und/oder eine von der zweiten Bewegungsistgröße (vᵢₛₜ₂) abgeleitete Größe (aᵢₛₜ₂) den ihr jeweilig zugehörigen spezifischen Bewegungsgrenzwert (vₐₘₐₓ,aₐₘₐₓ) des angetriebenen Werkzeugs (12a) überschreitet ein zweites Alarmsignal (A2) zu erzeugen, wobei das erste Alarmsignal (A1) von der Steuereinrichtung (23) an die Antriebseinrichtung (9) übermittelbar ist und das zweite Alarmsignal (A2) von der Antriebsseinrichtung (9) an die Steuereinrichtung (23) übermittelbar ist, wobei die Steuereinrichtung (23) ausgebildet ist bei Empfang des ersten Alarmsignals (A1) die Fehlerreaktion des Steuerungssystems (31) zu bewirken, wobei die Antriebseinrichtung (9) ausgebildet ist bei Empfang des zweiten Alarmsignals (A2) die Fehlerreaktion des Steuerungssystems (31) zu bewirken.

3. Steuerungssystem nach Anspruch 1 oder Anspruch 2, **dadurch gekennzeichnet, dass** die erste Bewegungsistgröße (vᵢₛₜ₁) von der Steuereinrichtung (23) an die Antriebseinrichtung (9) übermittelbar ist und die zweite Bewegungsistgröße (vᵢₛₜ₂) von der Antriebsseinrichtung (9) an die Steuereinrichtung (23) übermittelbar ist, wobei die Steuereinrichtung (23) ausgebildet ist falls die zweite Bewegungsistgröße (vᵢₛₜ₂) und/oder eine von der zweiten Bewegungsistgröße (vᵢₛₜ₂) abgeleitete Größe (aᵢₛₜ₂) den ihr jeweilig zugehörigen spezifischen Bewegungsgrenzwert (vₐₘₐₓ,aₐₘₐₓ) des angetriebenen Werkzeugs (12a) überschreitet die Fehlerreaktion des Steuerungssystems (31) zu bewirken, wobei die Antreibseinrichtung (9) ausgebildet ist falls die erste Bewegungsistgröße (vᵢₛₜ₁) und/oder eine von der ersten Bewegungsistgröße (vᵢₛₜ₁) abgeleitete Größe (aᵢₛₜ₁) den ihr jeweilig zugehörigen spezifischen Bewegungsgrenzwert (vₐₘₐₓ,aₐₘₐₓ) des angetriebenen Werkzeugs (12a) überschreitet die Fehlerreaktion des Steuerungssystems (31) zu bewirken.

4. Steuerungssystem nach einem der vorhergehenden Ansprüche, **dadurch gekennzeichnet, dass** die Fehlerreaktion in Form eines Anhaltens der Bewegung des angetriebenen Werkzeugs (12a) vorliegt.

5. Steuerungssystem nach einem der vorhergehenden Ansprüche, **dadurch gekennzeichnet, das** das Steuerungssystem (31) einen ersten Geber (33) zur Ermittelung der ersten Bewegungsistgröße (vᵢₛₜ₁) des angetriebenen Werkzeugs (12a) und einen zweiten Geber (27) zur Ermittelung der zweiten Bewegungsistgröße (vᵢₛₜ₂) des angetriebenen Werkzeugs (12a) aufweist.

6. Steuerungssystem nach einem der Ansprüche 1 bis 4, **dadurch gekennzeichnet, das** das Steuerungssystem(31) einen Geber (34) zur Ermittelung einer Bewegungsistgröße (vᵢₛₜ) des angetriebenen Werkzeugs (12a) aufweist, wobei die Bewegungsistgröße als erste Bewegungsistgröße (vᵢₛₜ₁) von der Steuereinrichtung (23) einlesbar ist und die Bewegungsistgröße als zweite Bewegungsistgröße (vᵢₛₜ₂) von der Antriebseinrichtung (9) einlesbar ist.

7. Steuerungssystem nach einem der vorhergehenden Ansprüche, **dadurch gekennzeichnet, dass** das Steuerungssystem (31) eine Leseeinrichtung (29) zur Ermittelung des angetriebenen Werkzeugs (12a) aufweist, wobei die Leseeinrichtung (19) das von ihr ermittelte Werkzeug (12a) an die Antriebseinrichtung (9) übermittelt.

8. Steuerungssystem nach Anspruch 7, **dadurch gekennzeichnet, dass** die Leseeinrichtung (29) als RFID-Leseeinrichtung ausgebildet ist.

9. Werkzeugmaschine mit einem Steuerungssystem (31) nach einem der vorhergehenden Ansprüche.

10. Verfahren zum sicheren Betrieb einer Werkzeugmaschine von der Werkzeuge (12a,12b,12c) antreibbar sind, wobei in einer Steuereinrichtung (23) und in einer Antriebseinrichtung (9) ein zu den Werkzeugen (12a,12b,12c) jeweilig zugeordneter für das jeweilige Werkzeug (12a,12b,12c) spezifischer Bewegungsgrenzwert (vₐₘₐₓ,v_{bmax},v_{cmax}) gespeichert ist oder mehrere den Werkzeugen (12a,12b,12c) jeweilig zugeordnete und für das jeweilige Werkzeug (12a,12b,12c) spezifische Bewegungsgrenzwerte (vₐₘₐₓ,aₐₘₐₓ,v_{bmax},a_{bmax},v_{cmax},a_{cmax}) gespeichert sind, wobei von der Steuereinrichtung (23) eine erste Bewegungsistgröße (vᵢₛₜ₁) eines angetriebenen Werkzeugs (12a) eingelesen wird und falls von der ersten Bewegungsistgröße (vᵢₛₜ₁) und/oder von einer von der ersten Bewegungsistgröße (vᵢₛₜ₁) abgeleiteten Größe (aᵢₛₜ₁) der ihr jeweilig zugehörige spezifische Bewegungsgrenzwert (vₐₘₐₓ,aₐₘₐₓ) des angetriebenen Werkzeugs (12a) überschritten wird eine Fehlerreaktion des Steuerungssystems (31) von der Steuereinrichtung (23) bewirkt wird, wobei von der Antriebseinrichtung (9) eine zweite Bewegungsistgröße (vᵢₛₜ₂) des angetriebenen Werkzeugs (12a) eingelesen wird und falls von der zweiten Bewegungsistgröße (vᵢₛₜ₂) und/oder von einer von der zweiten Bewegungsistgröße (vᵢₛₜ₂) abgeleiteten Größe (aᵢₛₜ₂) der ihr jeweilig zugehörige spezifische Bewegungsgrenzwert (vₐₘₐₓ,aₐₘₐₓ) des angetriebenen Werkzeugs (12a) überschritten wird eine Fehlerreaktion des Steuerungssystems von der Antriebseinrichtung (9) bewirkt wird.
